(19) Europäisches Patentamt
European Patent Office
Office européen des brevets

(11) EP 3 764 588 A1

(12) EUROPEAN PATENT APPLICATION

(43) Date of publication:
13.01.2021 Bulletin 2021/02

(51) Int Cl.:
*H04L 9/32* $^{(2006.01)}$

(21) Application number: 19185720.0

(22) Date of filing: 11.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Koninklijke Philips N.V.
5656 AG Eindhoven (NL)

(72) Inventor: LARMUSEAU, Adriaan Joris H
5656 AE Eindhoven (NL)

(74) Representative: de Haan, Poul Erik et al
Philips International B.V.
Philips Intellectual Property & Standards
High Tech Campus 5
5656 AE Eindhoven (NL)

(54) **ZERO-KNOWLEDGE CONTINGENT PAYMENTS PROTOCOL FOR GRANTING ACCESS TO ENCRYPTED ASSETS**

(57)     A cryptographic system (SYS) for data exchange and related methods. The System comprises a data controller (DC) to provide an encrypted asset (ED), a data receiver (DR) to receive the encrypted asset (ED); and a verifier module (VM). The verifier module (VM is to receive input from the data controller. The input includes, a) an encrypted key ({M}_PB), wherein the key (M) is indicated as capable of decrypting the encrypted assert (ED), and b) a commitment (C[M]) indicated as computed for the key (M). The verifier module (VM) ex- ecutes at least one pre-configured cryptographic proof based on the input to compute at least one verification result. The verifier module (VM) releases the encrypted key (E[M]) to the data receiver based on the verification result. The verification result is indicative of whether or not i) the encrypted key is a correct encryption of the key and/or, ii) the key (M) is capable of correctly decrypting the assert; and iii) the commitment(C[M]) is correct for the key (M).

FIG. 3A

EP 3 764 588 A1

**Description**

FIELD OF THE INVENTION

The invention relates to a cryptographic system for data exchange, to a data controller, to a verifier module, to a cryptographic proof generator, to related methods, to a program element, and to a computer readable medium.

BACKGROUND OF THE INVENTION

In 1989, X. Goldwasser, X. Micali et al in "The knowledge complexity of interactive proof system", publ. SIAM Journal on Computing, vol 18 (1), pp 186-208 described what, at first read, seems contradictory: a cryptographic protocol for proving knowledge of something, without revealing what this something is. Only the statement of being in possession of the knowledge is true is proven in their scheme. *Goldwasser's* scheme is the first example of a rigorous presentation of a "zero knowledge ["zk"] proof', a cryptographic protocol that ensures secure information exchange between parties. The confidential data may be encrypted by using symmetric or asymmetric encryption algorithms.

*Bitansky et al* described in in their 2011 paper "From extractable collision resistance to succinct non-interactive arguments of knowledge, and back again", Proceeding ITCS '12 Proceedings of the 3rd Innovations in Theoretical Computer Science Conference, pp 326-349, the so called *"SNARK"* (Succinct Non-interactive Adaptive Argument of Knowledge) protocol, a special variant of a zk proof. The SNARK zk-proof relies on "blind" evaluation of a target polynomial, configured to represent the statement one wishes to prove. The evaluation is blind because confidential data is hidden or shielded. The proof is based on processing only such hidden data. The hidden data is obtained from the confidential data by transforming same with certain one-way functions.

Zk proofs can be used with benefit in "shielded" rule checking setups. Examples include a blockchain system ("BC"), a distributed ledger on which are recorded transactions, mutually connected through hash functions, such as Merkle trees. BC may also be used to implement a smart contract. BC enforces rules to ensure soundness of the transactions so recorded, however, they do this in an open, transparent fashion, across peers in a distributed setup. A traditional, central, trusted third party (TT) is not required. The transparency, the openness of recorded transactions, is one of BC's strengths but, unfortunately, also its weakness as parties sometimes do not wish details of their transaction to be laid open. Zk-proofs allow addressing this by having the BC operate only on the hidden data.

SUMMARY OF THE INVENTION

They may be a need to improve further still security or efficiency in cryptographic protocols.

The object of the present invention is solved by the subject matter of the independent claims where further embodiments are incorporated in the dependent claims. It should be noted that the following described aspect of the invention equally applies to the to the data controller, to the verifier module, to the cryptographic proof generator, to the related methods, to the program element, and to the computer readable medium.

According to a first aspect of the invention there is provided a cryptographic system for data exchange, comprising:

a data controller to provide an encrypted asset;
a data receiver to receive the encrypted asset; and
a verifier module to receive input from the data controller. The said input includes: a) an encrypted key, wherein the associated (plaintext) key (sometimes referred to herein as "M") is indicated as capable of decrypting the encrypted assert, and b) a commitment indicated as computed for the key.

The verifier module executes at least one pre-configured cryptographic proof based on said input to compute at least one verification result, and the verifier module releases the encrypted key to the data receiver based on the verification result.

The verification result is indicative of whether or not i) the encrypted key is a correct encryption of the key and/or, ii) the key is capable of correctly decrypting the assert; and iii) the commitment is correct for the key.

In embodiments, the encrypted key is formed by encryption of the key (M) based on a public key (PB) of the data receiver (DR). In embodiments, the proof is a zero-knowledge ("zk")-proof, in particular a non-interactive zk-proof, such as SNARK.

Initially, when input data is received by the verifier module, it not known to the verifier module whether the encrypted key, once decrypted, is actually capable of decrypting the encrypted asset, and whether the indicated commitment is actually a commitment on the key. At this stage, the data controller merely provides the input data with the indication, or allegation, that the data can so deliver. It is only after the verification proof is executed and the verification results are available that the verifier module knows whether the input data received by the data controller is, as such, fit for making the asset accessible to the data receiver, or at least that this is the case with high probability. The cryptographic proof allows the verifier module to run the required confirmatory computations in relation to the key and the commitment, but in a shielded manner, without actually learning the plaintext key and the plaintext asset.

The proposed system implements a protocol to facilitate exchange of the encrypted asset between the controller who is the, possibly anonymous, party that controls the encrypted asset and the means to decrypt it, and the data receiver, likewise a possibly anonymous party, who may be programmatically/contractually entitled to receive access to the encrypted asset. This entitlement is may be managed and executed by an autonomous, independent piece of software and/or hardware, referred to as the verifier module, which may be implemented as a blockchain system, such as a smart contract or system.

The proposed system implements a proof of encryption, in particular for non-repudiation purposes in respect of the data receiver. In addition, the proposed system addresses maliciousness on the part of the data controller. Specifically, a malicious data controller may create a false proof, a proof that states that the data receiver will be able to decrypt the ciphertext E(D) to receive the expected plaintext D, when this is, in fact, not true. Using the committed key as proposed herein allows closing this possible loophole for a potentially maliciously acting data controller.

The proposed system addresses a vulnerability that concerns certain encryption algorithms that may be used to encrypt the asset to be exchanged. These algorithms are of the asymmetric type and are defined on curves over finite fields or groups. The asset is preferably encrypted by using an asymmetric (private-public key) encryption/decryption algorithm as these allow for more efficient computation because of smaller key sizes as opposed to symmetric encryption schemes. One example, in particular envisaged in embodiments, is elliptic curve encryption ("EEC"). These type of curves-over-finite-sets based asymmetric encryption algorithms are useful, as yet smaller key sizes can provide strong protection. However, as has been discovered by Applicants, spurious keys, prime multiples of the "actual" key M, may be used by a malicious data controller instead of the actual key M in such encryption algorithms to construct spurious proofs. Such is prevented herein by including the commitment computation into the construction of the proof for any one, but preferably both, of the proofs "P1", "P2" for the two statements i),ii), respectively.

Specifically, when M is interpreted as a point on an ECC curve, such as secp256r1 (or any other curve), a potential vulnerability loophole arises, as multiple keys (that is, numbers) may be mapped to the same point on the curve. This ambiguity may allow a malicious data controller to create a proof P1 (for statement i)) that is not valid for proof P2 (for statement ii)) and thus invalid overall. But this is prevented herein by effectively forcing the data controller to commit in proof P1 for i) and force a "redo" of the commitment computation iii) in proof P2 for ii). This allows fixing the same key between different proofs, such as in P1 and P2. In other words, if both statements i),ii) are to be proven, the correctness of the commitment is proven twice, once for each proof P1 and P2. This commitment-based solution is faster and requires less memory for processing as compared to curve point compression techniques, that propose a more complex data representation.

The proposed system may be used in the following contexts among others:

(i) in platforms that implement sale of encrypted genomic data, by extending a smart contract with the ability to receive and transfer currency;
(ii) Secure transfer of encrypted data in a federated network in particular for medical system, such as HL7 TF4FA. HL7 TF4FA is an *XML*-based standard for the exchange of medical data. This standard supports distributed ledger features for automated data transfer;
(iii) The design of a cloud system that handles the reception of encrypted data files for "IoT" (Internet of Things) devices. The verifier module may be implemented in one or more remote servers or peers ("Cloud"). This allows removing expensive encryption operations for IoT devices that are supposed to be receiving the encrypted data.

In a further aspect there is provided a data controller to provide input to a verifier module that is configured to mediate providing an encrypted asset from the data controller to a data receiver, by executing a pre-configured cryptographic proof based on the input, the input comprising an encrypted key, wherein a) the key is indicated as capable of decrypting the encrypted assert, and b) a commitment indicated as computed for the key.

In a further aspect there is provided a verifier module having an input interface to receive input from a data controller intended to provide an encrypted asset to a data receiver, the said input including, a) an encrypted key, wherein the key is indicated as capable of decrypting the encrypted assert, and b) a commitment indicated as computed for the key, the verifier module to execute at least one pre-configured cryptographic proof based on said input to compute at least one verification result, and the verifier to facilitate release of the encrypted key to the data receiver based on the verification result.

In embodiments, the verifier module is implemented as a blockchain system.

The computations for executing the pre-configured cryptographic proof by the verifier module are different from the computations for executing the pre-configured cryptographic proof as effected by the data controller. The different computations are achieved by the two parties, the data controller and the verifier module, inputting a prover key and verifier key, respectively into a proof template. In this manner, the two parties can configure the execution of the cryptographic proof based on the proof template. When the data controller executes the proof, output data is obtained that is supposed to indicate the statements i) and/or ii) and iii) are true. When the verifier module executes the proof, output data is obtained that allows checking whether the output data obtained the data controller indeed supports the conclusion that the statements i) and/or ii) and iii) are indeed true.

In a further aspect there is provided a cryptographic proof generator configured to generates the cryptographic proof that facilitates transfer, mediated by a verifier module, of an encrypted asset from a data controller to a data receiver, the cryptographic proof generator configured to:

receive input including a specification of a statement to be proven, the statement being i) that an encrypted key for the asset is a correct encryption of the key and/or ii) that the key is capable of correctly decrypting the assert, and iii) that a commitment for the key is correct; and
computing from the input, a cryptographic proof template executable by a processing unit.

In embodiments, the computing of the proof template includes mapping the received input into one or more polynomials defined on a finite field.

The proof template(s) can be used to construct the above mentioned pre-configured proofs as algorithms, in hard or software. In the template, the respective statements i),ii),iii) to be proven are reduced to statements about the one or more polynomials. The confirmatory computations correspond to the evaluations of the polynomial(s) at a secret point. The secret point forms a common reference string among the parties, the data controller and the verifier. The cryptographic proof generator further provides two keys, a prover key and a verifier key, to configure the cryptographic proof and the modify it for use by the data controller and the verifier module, respectively. The data controller uses the template by inputting the prover key together with private and public input to create data that may represent proof that the respective statements are true. The verifier module uses the proof template by inputting the verifier key and the public input to verify the data (the proof) created by the data controller.

In a further aspect there is provided a cryptographic method of exchanging an encrypted asset, comprising:

receiving input from a data controller, the said input including, a) an encrypted key, wherein the key is indicated as capable of decrypting the encrypted assert, and b) a commitment indicated as computed for the key;
executing at least one pre-configured cryptographic proof based on said input to compute at least one verification result, wherein the verification result is indicative of whether or not i) the encrypted key is a correct encryption of the key and/or, ii) the key is capable of correctly decrypting the assert; and iii) the commitment is correct for the key; and
in dependence on the verification result, releasing the encrypted key to a data receiver.

In a further aspect there is provided a cryptographic method of data exchange, comprising:
providing input to a pre-configured cryptographic proof template, the input comprising an encrypted key, wherein a) the key is indicated as capable of decrypting the encrypted assert, and b) a commitment indicated as computed for the key.

In a further aspect there is provided a method of generating a cryptographic that facilitates transfer of an encrypted asset from a data controller to a data receiver, comprising:

receiving input including a specification of a statement to be proven, the statement being i) that an encrypted key for the asset is a correct encryption of the key and/or ii) that the key is capable of correctly decrypting the assert, and iii) that a commitment for the key is correct; and
computing from the input, a cryptographic proof template executable by a processing unit.

In embodiments, the computing of the proof template includes mapping the received input into one or more polynomials defined on a finite field.

In a further aspect there is provided s computer program element, which, when being executed by at least one processing unit, is adapted to cause the processing unit to perform a method.

In a further aspect there is provided at least one computer readable medium having stored thereon the program element.

Definitions

A "*(cryptographic) encryption algorithm*", or encryption operation, is a well-defined, reversible, transformation, which on a given input data ("plaintext"), produces an output ("cipher(text)"), achieving a certain security objective.
In particular, the plaintext may have a certain use or purpose. The ciphertext is in general is no longer suitable for that use or purpose.

"*plain text/cipher(text)*" may not necessarily constitute text data, but may be any other data type of data (eg strings) such as imagery, video, audio, etc., or a combination of any of those data types.

A "*decryption algorithm*", or a decryption operation, is a reverse transformation to an encryption algorithm that can recover the original input given the output.

"*key*" is data that allows, either on its own or possibly in combination with other key(s), reversing the encryption algorithm, that is, performing the decryption algorithm. "*key*" may also be used more generally as any type of enabling data in the context of a task or computation.

"*hard/feasible*" are qualifiers from complexity theory that classify computational problems based on computing resources, in particular runtime of a conceptual Turing Machine. A computational problem/task is "hard" if runtime scales in non-polynomial fashion with input string length. A computational problem/task is "feasible" if it is not hard, that is, if the runtime does scale polynomially with runtime.

"*one-way function*" is a mapping from one string to another. In general, an input string of any length is mapped to an output string of a given fixed length which is the same for all input string lengths. A one-way function is hard to reverse but is feasible to forward compute. A hash function is an example of a one-way function. Another example is the mapping $x \to g^x$ in a finite field or group of order $p, p$ prime and sufficiently large.

"*probabilistically hard/feasible*" is a relaxation of "*hard/feasible*" as defined above. A computational problem is "*probabilistically hard*" if it is hard on average, that is, one succeeds only with negligible probability in polynomial time. A computational problem is "*probabilistically feasible*" if one average one succeeds in polynomial time. In this text, all references below may be taken to refer to "*probabilistically hard/feasible*" unless otherwise stated. "*probabilistically feasible*" is the opposite of "*probabilistically hard*".

"*zk*"-*cryptographic proof protocol* is a cryptographic protocol between parties that attempts to prove a statement and when doing so does not divulge any confidential data in relation to that statement other than that the statement is true or not. There is a weaker version, in that it is not feasible, or not probabilistically feasible, to learn the confidential data given the outputs produced by the cryptographic proof protocol or by the input processed by that protocol. Furthermore, in this weak version, there is only a negligible probability that the proof results in a conclusion that a statement is true, whilst the statement is in fact not true. The zk- cryptographic proof protocols discussed herein may be taken to relate at least to this weak notion of "zk".

BRIEF DESCRIPTION OF THE DRAWINGS

Exemplary embodiments of the invention will now be described with reference to the following drawings, which are not to scale, wherein:

Fig. 1 is a schematic block diagram of a computerized system for data exchange using a cryptographic proof technology:

Figs. 2 to 4 show portions of the system of Fig. 1 at different stages of the data exchange process.

Fig. 5 is a block diagram of a computerized system of generating a cryptographic proof: and

Fig. 6 are flow charts of a computer implemented method for data exchange using a cryptographic proof protocol and a flow chart of a method of generating a cryptographic proof.

DETAILED DESCRIPTION OF THE EMBODIMENTS

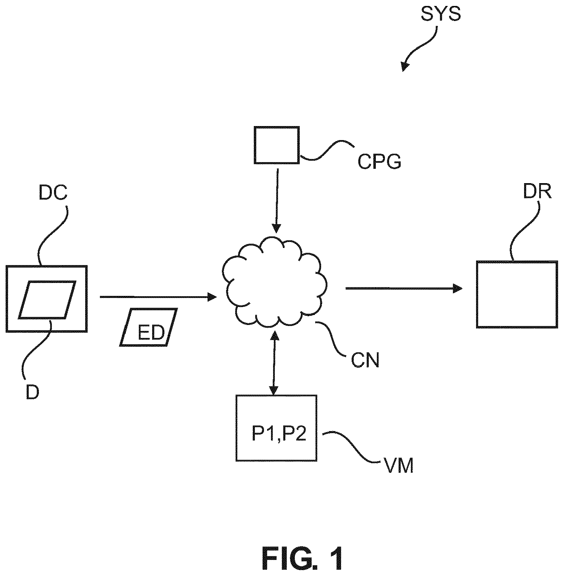

With reference to Fig. 1, there is shown a schematic block diagram of a computer-implemented system SYS for exchange of data. More specifically, the system SYS is configured to implement a cryptographic protocol to securely exchange an asset D from a data controller DC to a data receiver DR. The data exchange is mediated by a verifier module VM. The data exchange is going forward once the VM checks that certain one or more predefined conditions are met. Very broadly, and as will be explained more fully further below, the cryptographic data exchange system SYS implements a zk-cryptographic proof to check the condition is or is not meet. The zk-cryptographic proof is configured to rule out, or to at least reduce the likelihood for, the data receiver DR making certain repudiation claims, such as not being able to decrypt the asset encrypted asset ED. At the same time, the system SYS use a specially adapted zk-cryptographic proof to address a certain vulnerability that Applicant has discovered in relation to certain zk-cryptographic proof protocols such as SNARKs, that rely on the evaluation of polynomials over finite fields.

Preferably, the data exchange of the digital asset D is done fully automatically. Preferably, the data ("the asset") D is first encrypted, for instance by the data controller DC using an encryption machine ENC1, to form the encrypted version ED of asset D The encryption is done by the encryption machine ENC1 by applying to the plaintext data D a symmetric or asymmetric encryption algorithm E. Preferably, a symmetric encryption is used to encrypt the asset D, as the asset D may comprise a large amount of data in which case asymmetric schemes become infeasible. Although for small sized assets, an asymmetric scheme may be used, it is assumed herein that indeed a symmetric encryption algorithm is used. Preferably, a key M needs to be used to accomplish decryption of ED, that is, to reverse the encryption operation, by transforming ciphertext ED back into its plaintext D. However, the key M itself is not revealed to the verifier module VM. In embodiments, the key M is itself decrypted by a second encryption algorithm ENC2 to produce an encrypted artifact {M}_PB of the key. This, second, encryption ENC2, may be implemented by an asymmetric encryption algorithm using a public key PB of the data receiver DR.

The verifier module VM checks, based in particular on the encrypted artifact {M}_PB of the key, whether one or more conditions are fulfilled. Said differently, the data controller is publishing the cryptographic proof in terms of certain data. The verifier module checks whether the proof is sound by performing calculations on the published data. The one or more conditions can be represented by one or more statements, referred to herein as one more "target statements" in relation to the asset D. The target statement represents "knowledge" of the data controller DC. The verifier module checks whether the cryptographic proof as published by the data controller DC is sound, that is, whether it follows from the published proof that the target statements is true.

Once the target statement is found to be true, the data receiver DR is being granted access to the asset D. More specifically, artifact {M}_PB is released to the data receiver DR. Data receiver can then decrypt {M}_PB to obtain plaintext key M. The data receiver is thus enabled to decrypt, by means of the (now decrypted) decryption key M, the encrypted asset ED to so obtain the unencrypted asset D in plaintext. IN other words, two decryptions "in series", formally PB_{M}-> M-> D, are applied so that the data receiver can access plaintext D.

Although in the following operation of the system SYS will be explained with reference to the (one or more) target statements being true or not, with data receiver DR granted access to the unencrypted asset D if the target statements are true, it will be understood that the below may also be implemented in terms of "dual" formulations, also envisaged herein in alternative embodiments, where access is granted if the target statement is wrong. Also, in the following we will be referring on occasion to the "target statement", with the understanding that sometime, as indeed envisaged herein in embodiments, two or more such target statements are of interest.

The digital asset D may be any one of more computer readable data files or parts thereof, or other computer readable code. The one or more files may include video data, image data, text data or any other, or a combination of any one of the foregoing. The proposed system may be applied for instance in large scale automated data exchange operations. Examples include federated hospital networks, supply chain block chains or genomic data beacons, where genomic data is transferred from one party, such as a hospital, to another hospital.

The verifier module VM is advantageously not required to be a trusted third party. The verifier module may be arranged in block chain technology. The verifier module in particular may be arranged as a smart contract that checks the one or more predefined conditions before granting access of the data receiver DR to the decrypted digital data asset D.

The verifier module VM may be communicatively coupled through a suitable communication network CN with either one or both of the data controller DC and the data receiver DR.

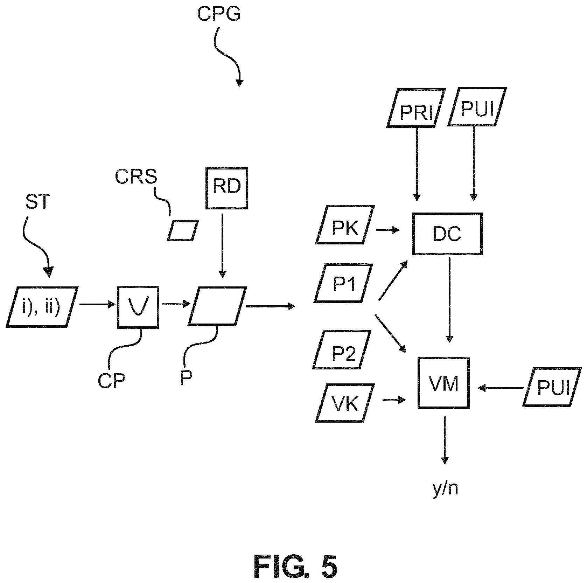

In more detail, and referring back to what has been mentioned earlier, the system SYS is implemented by means of a zk-cryptographic proof generated by a cryptographic proof generator CPG. A cryptographic proof generator CPG may be requested by the data controller DC to process certain inputs, referred to herein as private PRI inputs and public PUI inputs, in addition to a specification of the one or more target statements. The private and public inputs, as well as the target statement specification, is then processed into an algorithmic construction, referred to herein as a proof template P1,P2.The proof template, possibly one for each statement, is an executable algorithmic arrangement, a program for instance, that allows the verifier module, or indeed any other interested party in possession of certain verifier keys, the verifier keys VK (on which more below), to verify that the target statement is true. However, the verifier module will remain unaware of the decrypted data D and of the private input. Instead, the verifier module is only allowed to operate on hidden data. The hidden data is obtained by applying a one-way function, such as a hash function, to the private input, and all other data that needs hiding. This function may be referred to herein as hiding functions ("HF), a concept that will be explained more fully below. The HF is hard to invert. But it is feasible to forward compute when applied to the data to be hidden. The result of applying the HF to the data *d* to be hidden are "hidings", FH(d). To verify the condition(s) are fulfilled, the verifier VM may execute the proof template based on input that includes only public data PUI and the hidings FH(PRI) of private input PRI. For reasons that will become apparent further below, the public input includes a commitment (that is, a committed to value) of the decryption key M. No private or other confidential data is used by the verifier module VM when checking the veracity of the target statement. But, because of the manner in which the proof templates are constructed, the verifier module can still establish, either with certainty or with arbitrarily high probability, that the one or more target statements are true. The proof templates P1,P2 for the one more statements to be proven are produced by the cryptographic proof generator CPG, operation of which will be explained later more fully below at Fig 5.

The system SYS is configured to rule out, or reduce the likelihood, for the data receiver to successfully claim that it was unable to decrypt the encrypted asset ED and was hence allegedly unable to access the unencrypted decrypted asset D. Advantageously, the verifier module, as it operates only on public data or hidden data at all times, does not need to be a trusted third party and is hence not arranged in embodiments as a centralized trusted third party "TTP". Yet, despite the ignorance of VM in respect of the encrypted data, by applying the cryptographic zk-proof, the fulfillment of the one or more conditions can be checked thus enabling fully automated exchange of data.

The system SYS can operate quickly and with low bandwidth requirement because the proof template merely requires evaluation of a single (secret) point of a specially constructed polynomial that represents the target statements to be proven. The proposed fully automatic secure data exchange system SYS can be beneficially deployed in a large scale setting with high data throughput requirements, such as the mentioned medical data exchange in the clinical realm or the processing of large amounts of sensor data in an internet of things ("IoT") setting, such as data provided by cars, airplanes, or sensors of computing units, such as mobile phones, tablets etc. The confidentiality or privacy of the data can be maintained whilst certain conditions, the target statements, can still be checked.

The data controller DC, the verifier module VM and the data receiver DR may be arranged as respective computing devices. Specifically, the data controller DC and/or the data receiver DR, may be arranged as a laptop, a smart phone or any other computing device. The verifier module VM may be arranged in a cloud environment. The verifier module VM functionality may be distributed across one or more servers to which the data controller DC and/or the data receiver can connect to. The communication network CN may be wired or wireless, or a mix thereof.

Once the verifier module VM has checked, by way of the zero knowledge cryptographic protocol, that the one or more conditions are met, the verifier module releases the encrypted version {M}_PB of the key M, previously used by the data controller to encrypt the asset D into the encrypted data asset ED. The encrypted asset ED may be made available to the data receiver before or after release of the encrypted key PB_{M}. However, without the key M, the encrypted data ED is as such useless to the data receiver DR. The decrypted asset D becomes available to the data receiver DR only once the data receiver DR has access to the decryption key M in plaintext.

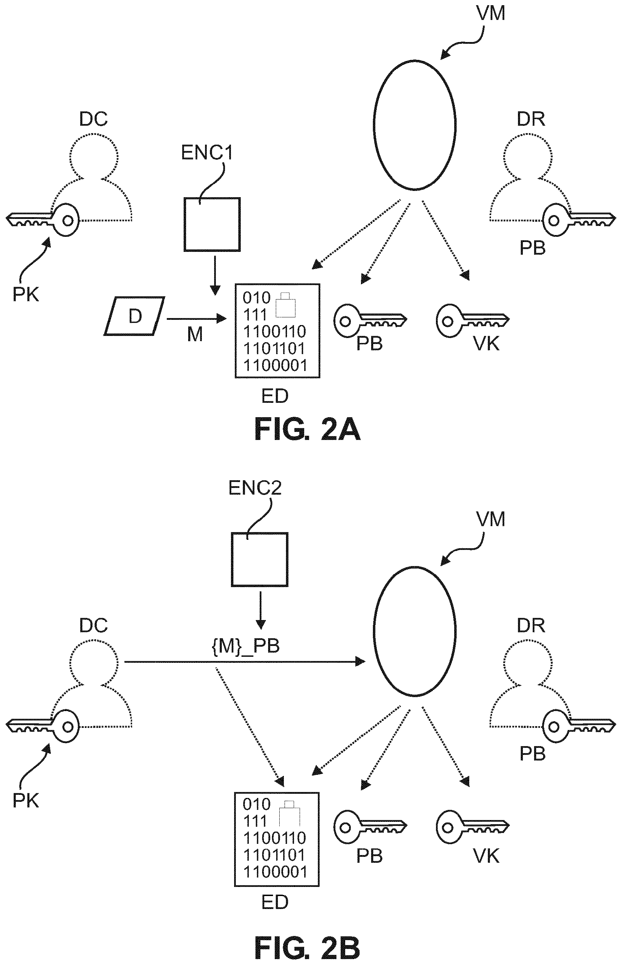

Reference is now made to Figs. 2-3 to explain in more detail various states of the system during operation.

The goal of the protocol is to provide the receiver DR, identified by their public encryption key PB, with the ability to decrypt the encrypted data ED in a manner that enables the intermediary verifier module VM, such as smart contract, to verify that this is indisputably the case. To do so, our proposed protocol envisaged hat the controller have access to one or more zk-SNARK proving keys PK and that the verifier module VM is provided with the corresponding verifying keys VK as illustrated in Fig 2A. The starting point of the proposed protocol as implemented in data exchange system SYS requires the controller DC and intermediary VM to own the appropriate keys, PK and VK, respectively. As illustrated in Fig 2B, the controller DC submits the key M, that the DC alleges is capable of decrypting the encrypted data ED, in a manner that can prove to the verifier VM that the receiving party DR will indisputably be able to use that key M for the decryption. The cryptographic proof for this is executed by VM using the verifier key VK without ever divulging to the verifier VM what that key M is.

The encrypted data ED can be decrypted with the key M, which to perform the obligation encoded in the verifier module VM, must be transferred to the receiver DR. The protocol, however, cannot simply allow for the controller DC to upload the key M directly to the verifier module, as in most smart contract solutions, such as HL7's TF4FA and other blockchain-based smart contracts, the data submitted to the smart contract is open and transparent to the entire peer-network. A "naked" upload of key M would thus reveal the encrypted data to the entire network. Instead the key M must itself be encrypted in a manner that only the intended receiver can decrypt. The protocol does so by requiring that M be encrypted with PB: the public key of the receiver (see Fig. 2B), creating an encrypted artefact {M}_PB. This, encryption however is adversarial to the operation of intermediary VM, as the key M is now encrypted in a manner only the receiver can decrypt, making it impossible for the module VM to directly verify that the (possibly anonymous) controller DR is indeed meeting his obligation to give access to the receiver DR.

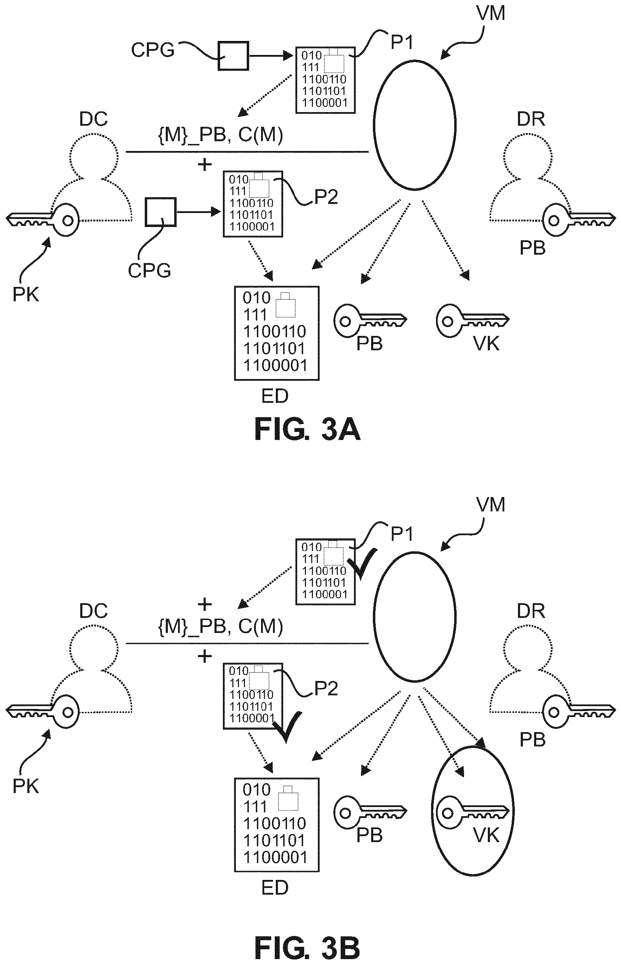

This deadlock situation is addressed by proposed system SYS by using at least one (preferably both) of the following two novel zk-proofs, preferably SNARKS, as illustrated in Fig. 3A:

> (P1) a first proof as proposed herein proves that the following statement (i) is true: that {M}_PB is a correct encryption of M with public key PB. This eliminates the risk of the receiver claiming that he could not decrypt ED due to not being able to decrypt M.

> (P2) a second proof proves that the following statement (ii) is true: that M is a workable decryption key for ED. This ensures that the receiver cannot claim to not being able to decrypt ED due to M being the wrong key.

The conditions/target statements i) and ii) are being checked by means of the related by the verifier module using cryptographic proof templates P1,P2, respectively based only on public data PUI and the verifying key VK. It will be understood that any party, not necessarily the verifying module, in possession for the key for verifying purposes VP and public data as a matter of principle verify whether the two conditions are met. Please select where at least one of the two conditions i), ii) are met. To prevent disputes, the controller DR uploads two novel zk-SNARK proofs P1,P2 to the verifier module VM to enable issueless resolution.

Referring now to the proof P1 in relation to statement i) in more detail, this proof takes as its public inputs PUI the encrypted artefact ED, the receiver DR's public key PB, the encrypted key {M}_PB, and a cryptographic commitment C(M) for the key M. The private (secret) inputs of proof P1 for (i) are key M (in plaintext) and two random numbers r and s. The proof itself takes the secret inputs and first calculates the correctness of the commitment C(M) by computing *HASH*(M + r), with a hash function HASH() on the concatenation of *M* and *r*. If correct, the proof then verifies the correctness of {M}_PB by applying the related public key encryption algorithm, preferably for large numbers, such as ElGamal or RSA where M is the number that is encrypted, s the random factor for the encryption, and is PB the public key (for DR) for the asymmetric encryption of the asset D. If the result of this computation matches the cryptographic artefact ED, than the proof shows that the anonymous controller DR is indeed truthful.

However, the (anonymous) data controller DC produces the proof by inputting both the private and public inputs. The verifier module VM then attempts to verify correct encryption, and correct "decryptability" by using the public inputs and the verifier key VK in the proof template P1 produced by the controller DC. When the controller inputs the private inputs, there is a risk that the controller produces, maliciously, a proof template by inserting not the actual private value M into the zk-SNARK proof generator CGP, but uses, instead, a prime-field multiple α*M of the actual M. This vulnerability can be avoided herein by including in the protocol production not only M, but also a commitment C(M) as a public zk-SNARK input that is shared with the verifier module VM.

Referring now to second proof P2 in relation to statement (ii), this takes as public input the same commitment C(M) and the encrypted data ED. The private (secret) inputs of the proof (ii) are the original data D, the key M and the random number r.

Like proof P1 for (i), proof P2 for (ii) computes *HASH*(M+r) to verify the commitment C(M). Next the proof encrypts D using M, if the result is equal to ED then the proof has verified that M is a valid encryption key for D.

Proof for i) and ii) are preferably produced herein, although embodiments are envisaged where either i) or ii) is used instead but not both.

The cryptographic proof generator CPG, as will be explained in more detail below at Fig 5, releases a proof executable (referred to herein as P1 and/or P2) which can be executed by any processing device PU, such as the data receiver or the verification module VM, or any other party. The proof template P1,P2 receives as input the public data and the verification key VK. The output of the proof once executed produces as output a binary "1" or "0", indicating whether or not the respective statement i) or ii) to which the template relates have been found to be true. For the verifier module VM, the proof templates are mere "black boxes". Herein, because in embodiments there are two statements of interest i) and ii), "P1" refers to the proof/proof template for statement i) and "P2" refers to the proof template for condition ii).

Fig. 3A is an illustration as to how the proof generator CPG generates the two templates P1 and P2 and makes these available to the verification module VM. In addition thereto, the key for verifying the proofs VK is also made available to the verifying module VM. The proof generator CPG is preferably executed by the data controller in a trusted execution environment.

Referring now to Fig. 3B, this illustrates application by the verifier module VM of the proposed cryptographic scheme. In particular, the verifying module VM executes the proof acceptable P1 and/or P2 by applying public data, in particular, the encrypted key and the commitment to the key and the verifying key VK. The successful execution of the two proof templates P1 and P2 by the via the verifying module VM based on one or more verifying keys VK as indicated in Fig. 3B) as two "ticks".

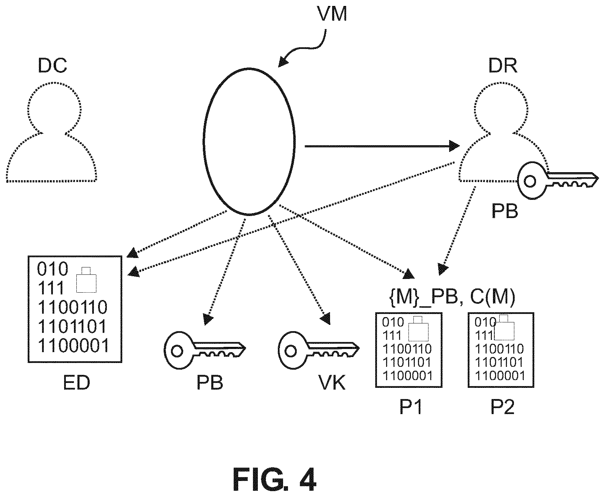

If these proofs P1, P2 for statements i),ii) can be verified by the verifier module VM, it can then reasonably conclude that the controller has fulfilled his obligations. If so, the receiver DR is allowed to receive the artefact {M}_PB, thus enabling receiver DR to decrypt the encrypted data ED. Once both proofs P1 and P2 executables return a confirmatory signal that indicate that both of the respective statements i), ii) are true, the encrypted key {M}_BP may be released to the data receiver DR as illustrated in Fig. 4. The data receiver DR can then decrypt {M}_BP to access plaintext key M, which in turn allows access to plaintext asset D.

Turning now to more details in relation to the encryption/decryption schemes used by the system SYS, this may be implemented in embodiments by using an asymmetric scheme, preferably in the context of elliptic curve cryptography (ECC), for the encryption of the key M, whilst using a symmetric scheme for asset D. For instance, the encryption and decryption of the asset D can be achieved with for instance with AES-256, making M, for example, a 256-bit long encryption key. Longer or smaller keys may be used.

As to the. Preferably, EEC based encryption/decryption of the key M, in embodiments, the secp256r1 curve is used to implement the asymmetric public key PB and its private counterpart, although other elliptic curves, or indeed other suitable algebraic curves, may also be used.

In more detail, the encrypted the artefact {M}_PB can be created utilizing asymmetric encryption, such as basic *ElGamal* encryption or others. In some asymmetric encryption algorithms that operate on curves, such as in ECC where elliptic curves are used, M, the key for the asset D, is mapped ("embedded") to an elliptic curve point. In some embodiments, this is done by using M as the *x*-coordinate of the curve point and computing the other (*y*) coordinate using the curve's equation. A random factor *s* is used to create the public key PB. It is in such or similar contexts, where the above mentioned vulnerability may emerge, as there are in some cases more than one "messages" M that can map to the same curve point. A maliciously minded data controller DC may calculate those spurious points by computing prime multiples of the actual M. To prevent exploiting this ambiguity, the protocol proposed herein requires the data controller to adhere to the same M between proofs by means of the commitment.

The proposed commitment-based approach has advantages over previous approaches such as in US 6,252,960, where point compression is used. This and similar approaches proposes to address the ambiguity by a more complex representation of curve points. However, using a more complex representation in zk-protocols such as zk-SNARK would lead to expensive memory requirements and performance slowdown. For instance, if one were to represent the involved curve points in a 256 points representation inside zk-SNARK as proposed in point compression techniques, this would require in the order of $256^2$ bytes given that each point in the zk-SNARK already requires a 256 bit representation. Also, such a complex representation of M will reduce turnaround time as zk-SNARK and similar protocols are based on evaluation of certain polynomials (more on which, see further below at Fig 5). In addition, the proposed system SYS requires M to be random, and this requirement would break down in the complex representation constraints of point compression techniques and similar techniques.

The commitment C(M) may be implemented by taking a hash function, such as SHA-256 or other, and hash of the concatenation of M and another random value r.

In the above, algebraic curves other than elliptic may be used instead or in addition. Also, the above described encryption/description do not necessarily require algebraic curve cryptography, however algebraic curve based encryption schemes (such as elliptic) allow for shorter key length.

With reference to the block diagram in Fig. 5, operation of the cryptographic proof generator CPG is now explained in more detail. The CPG may be implemented in hardware or software or partly in both and may be executed by the data controller DC.

Broadly, the statements of be proven, i) or ii) or both (or more than two) are mapped by a quadratic arithmetic program (QAP) compiler CP onto a polynomial. The statements i), ii) can be reduced to properties of this target polynomial. The polynomial is preferably over finite field. The polynomial P is the input into a zk-SNARK generator CPG together with a random secret element *q*. The result of operation of the generator CPG are public proving key PK and verification key VK which encode the secret point q. The controller DC uses the public proving key PK together with the above mentioned public PUI inputs and private (that is, secret) inputs PRI to create the proof template P1,P2. The verifier module VM verifies the proof by means of the public verification key VK and the respective proof template P1,P2. Note that any other party with the public verification can do the same. The proof templates prescribe certain computations involved in the evaluation of the target polynomial at the secret seed point q. The zk-element of the protocol is fulfilled because the proof template performs the polynomial evaluation in "blind". In other words, the template does not operate on the actual coefficients of the polynomial P, but on a combination of hidings of the actual coefficients, on which more further below. Neither prover DC nor verifier VM know the secret point q. The zk-SNARK may be implemented by existing program libraries, such as "libsnark" combined with a high-level logical circuit compiler such xj SNARK.

Turning now in more detail to the compiler CP, the statements i) ii) to be proven may be expressed more formally as:

$$\text{statement i)} \rightarrow CF(M,r) = C(M) \wedge ENC1^{PB}(s, M) = \{M\}\_PB \qquad (1a)$$

$$\text{statement ii)} \rightarrow CF(M,r) = C(M) \wedge ENC2^{M}(D) = ED \qquad (1b)$$

wherein:

$CF(\blacksquare,\cdot)$ is a suitable commitment function, a one-way function such as a hash function, that operates on a combination of M and random r;
$ENC1^{PB}(\blacksquare,\cdot)$ is an asymmetric encryption function that maps plaintext M to cipherthext M}_PB, given the public key PB;
$ENC2^{M}(\blacksquare,\cdot)$ is a symmetric encryption function that maps plaintext *D* to ciphertext *ED* using key *M*; and
"$\wedge$" is the logical *AND*-operation.

At its core, the high level statements i),ii) noted above are essentially mathematical computations over numbers. As such, and has been reported by C Lund et al in "Algebraic methods for interactive proof systems", published "Proceedings [1990] 31st Annual Symposium on Foundations of Computer Science", Conference St Louis, MO, USA, 22-24 October 1990, IEEE and by R Gennaro et al in "Quadratic Span Programs and Succinct NIZKs without PCPs", published in Johansson T., Nguyen P.Q. (eds), "Advances in Cryptology - EUROCRYPT 2013. EUROCRYPT 2013. Lecture Notes in Computer Science", vol 7881, pp 626-645, Springer, Berlin, Heidelberg, 2013, every computation such as i),ii), or in fact any other bounded, deterministic, computation without infinite loops or randomness, can be associated with a certain polynomial $P$ having coefficients $a_k$, $k=0,1,...d$ and degree $d$.

In the compilation, one or both high level statements (1a),(1b), in particular the computations that they represent, are first expressed as an arithmetic circuit AC. Optional the AC may then be transformed into a "rank-1" constrained system. Rank 1 constraint systems are representation of an arithmetic circuit as matrix computations of the form a*b-c = 0, with the "rank" referring to the rank of the involved matrices.

The computational statement, that is, that there is equality among the quantities involved as per eqs (1a) and/or (1b) above, can be reduced according to *Lund* and *Gennaro* (supra) into a combination of "atomic" multiplication and addition operations. Each such atomic operation, multiplication or addition, may be represented as an operational arithmetic gate. Depending on the statement to be proven, the operational gates are either interconnected by edges to form a network with input notes. The edges specify the inputs to be processed by the operational gates. The operational gates in turn produce outputs which may then be input into other operational gates and so forth to so define a network, the AC that has a single (or more) output gate representing the result of the arithmetic operation. As reported by *Gennaro,* the edges may be associated with a respective monomial ($X$-$e_i$), with a respective arbitrary element $e_i$ from the underlying finite field. The monomials for each edge may then be combined into the target polynomial P that represents the statement to be proven.

The proof for the statement i) or ii) can now itself be reduced to an evaluation of the polynomial at single secret point $q$ that is known neither the prover DC nor the verifier DR. This secretly chosen point $q$ is generated by the random generator RD. The polynomial is so constructed that it returns zero at points that corresponds to a correct assignment of the inputs, in other words, inputs that represent the true statement to be proven. The equalities in eqs (1a,1b) are reflected in the fact that $P$ has a divisor $D$ and can be written as $P = D \cdot T,$ with $P, D$ and $T$ polynomials over the finite field. For the given, secret seed point q, we thus have equality:

$$P(q) = D(q) \cdot T(q) \qquad\qquad (2)$$

The relationship (2) may be used as a basis for a test: if there is equality at $q,$ the statement is considered proven. Because the proof protocol such as SNARK is "zk", equation (2) cannot be used directly as the test, because one does not wish to divulge the coefficients of the polynomial $P.$ That is, in zk-proofs, the coefficients are not themselves communicated to either party. Homomorphic hiding HFs are used instead to "shield" the coefficients of the statement representing polynomial $P.$

As mentioned, the polynomial P is defined over a finite field $F^p$ of order $p$, with $p$ a prime number. In some embodiments, the polynomial $P$ defined on an elliptic curve $\mathbb{C}$ ($F^p$) defined over the finite field $F^p$. The points of the curve $\mathbb{C}$ ($F^p$) form a sub-set of the Cartesian product $F^p$ x $F^p$. The subset $\mathbb{C}$ ($F^p$) is itself a finite field with its own two operations, addition and multiplication. The homomorphic hiding function supports multiplication and addition operation on $\mathbb{C}$ ($F^p$).

In embodiments, the Tate pairing function may be used to define such a homomorphic hiding function as know from algebraic geometry. The hiding function is preferably a one-way function. Such a homomorphic hiding function $HF(\cdot)$ can be defined in terms two generators $g1,g2$ of sub-groups in $\mathbb{C}$ ($F^p$). In particular, $g1, g2$ can be used to define the homomorphic multiplication operation as a mapping $G1$ x $G2$ -> $G_T$, with $G1, G2$ and $G_T$ being different sub-groups in $\mathbb{C}$ ($F^p$). Other pairings such as the Weil pairing may also be used, all envisaged herein in embodiments.

With an HF, relationship (2) can be written in hidden form as:

$$HF(P(q)) = HF(D(q)) * HF(T(q)) \qquad\qquad (3)$$

Eq (3) is a "hidden form" of (2), thanks to the homomorphic hiding function. Eq (3) can be used as the test for the proofs of i),ii). Eq (2) can hence be checked in "blind". Preferably, the compiler CP initially produces the polynomials P, D and T, that represent relations (1a), and/or (1b) as polynomial expressions with variables for the private and public inputs. These polynomial expressions may then be used to formulate the proof templates P1,P2 which may then be used by the data controller to post proof of i) and/or ii) to the verifier module. The verifier module VM then uses the templates P1,P2 to verify the proof.

The proof generator CPG computes the verifier key VK and the prover key PK. The prover key may be larger than the verifier key. The keys modify the computations performed by the template P1,P2. That is, the computations are different for the data controller DC and the verifier VM. The mentioned verifier key VK allows the verifier VM to check the validity of the proof against certain public inputs, and the prover key PK enables one to generate proofs using private inputs. The template P1,P2 encodes the statement to be proven in terms of the above mentioned polynomials. The keys PK,VK the template P1,P2 r perform evaluations at the secret evaluation point q to either post a respective proof or to verify the posted proof.

In more detail, the prover key PK and verifier VK generated by CPG may include, the secret evaluation point *q* and a specification of points of the two groups *G1,G2* that define the HF. The prover key is made available to the data controller DC and the verifier key is made available to the verifier VM.

When the proofs i) and/or ii) are to be posted to the verifier VM, the data controller "loads" one or both of the templates P1,P2 with the private PRI and public PUI inputs and with the prover key PK. With the prover key, the data controller DC thus "runs the proof' to compute, for instance, the left hand side of eq (3). The result is published so that the verifier VM can access the result for verification. The verifier VM, or any other interested party having the verifier key VK, then loads the public input PUI and the verifier key VK into the corresponding proof template P1, P2. The verifier key VK effects changing the computation previously performed by the data controller DC when supplying the prover key PK. The computation performed by the template P1,P2 based on the verifier key VK now represents, for instance, the right hand side of eq (3). The verifier VM thus verifies the data controller's proof by supplying the verifier VK key to "run the check" by computing, for instance, the right hand side of (3).

If there is equality found upon the verifier module VM executing the one or more proof templates P1,P2, the artifact {M}_PB is released to the data receiver DR. If no equality is found in (3), the attempted data exchange transaction is blocked, in particular M}_PB is then not released to data receiver DC. An alert message may be send to the data receiver DR or to an administrative entity.

Alternatively, but less preferable, it may also be possible to hard code the public inputs into the templates P1,P2. Preferably however, no such hard coding is done as this allows reusing the proof templates with new data.

The zk-proofs envisaged herein are preferably non-interactive, such as SNARK. It is in part the non-interactiveness that allows the system SYS to run fully-automatically. Non-interactive zk-proofs may be based on the common reference string model ("CRS") as an underlying modelling assumption. That is, the data controller DC and the verifier module VM share a secret, namely the earlier mentioned random seed *q* as part of the private input for the proof generation. The prover key PK and the verifier key VK represent the CRS. The proposed non-interactive zk-proof constitutes a proof of correctly performed encryption. It is non-interactive, because sending the proof template P1, P2, together with the key VK, to the verifier VM is enough to establish, veracity or not, of the statements to be proven. There is no interaction between data controller and verifier module required over and above this exchange. It is also "zk" because the data that constitutes the proof template, that the VM is to execute, and the VK do not divulge any information on about the statement i) or ii) other than they are or are not true.

The use of the commitment C(M) as proposed herein is superior to a mere hash value, because the commitment allows to hide a "reuse" of key M. As mentioned earlier, one risk of proving {M}_PB in a zk-SNARK is that, because the prover (the data controller DC) controls all inputs, it may be possible that the prover maliciously creates "fake" proofs by using field multiples of M instead of the real value M. Using, as proposed herein, the proof of M as valid for ED, we effectively fix M. Specifically, the proof generated by zk-SNARK generator CPG includes a verification of the commitment to M, that is, to C(M). Including the commitment C(M) is more than merely proofing knowledge of key M for ED without committing to. As proposed herein, M is fixed in the proof of the encryption of ED, by means of using C(M). In the proof for {M}_PB in relation to statement ii), it is proposed to include an additional computation in P2 to replicate the commitment computation as used in P1. This double computation in relation to the commitment C(M) verification proofs that the prover DC knows the correct blinding factor r and that the key M used as private input to the zk-SNARK generation matches up with C(M). This additional computation in relation to the commitment allows protection of the proof for {M}_PB from possibly malignant inputs by the prover DC. In addition, the proof so generated to proof {M}_PB can be reused for other private keys PBs, without having to redo the proof for M as valid for ED, because we prove it for the commitment C(M).

It is not necessarily required herein for proof of i) and the proof of ii) to be, in itself, separate zk-SNARK proofs P1,P2, respectively as envisaged in some embodiments herein. An alternative implementation, both proofs may be combined into one "large" proof by using an addition AND operation. Such as combined proof would also be cryptographically valid and is indeed envisaged herein in embodiments. However, so combining into a single proof may require more computing and memory resources, which may overburden the controller DC or verifier VM. Advantageously, using two separates proofs, proof (ii) (that is, the proof on the correctness of M) may be reused for different proofs of statement i), as long as the commitment is reused.

The verifier module VM may be implemented as a smart contract, or any other distributed ledger systems (eg., blockchain based), such as an *"Ethereum"*. Alternatively, verifier VM may be implemented as an HL7 Trust Contract, or other. HL7 is an XML-mark-up language based standard for the exchange of medical data.

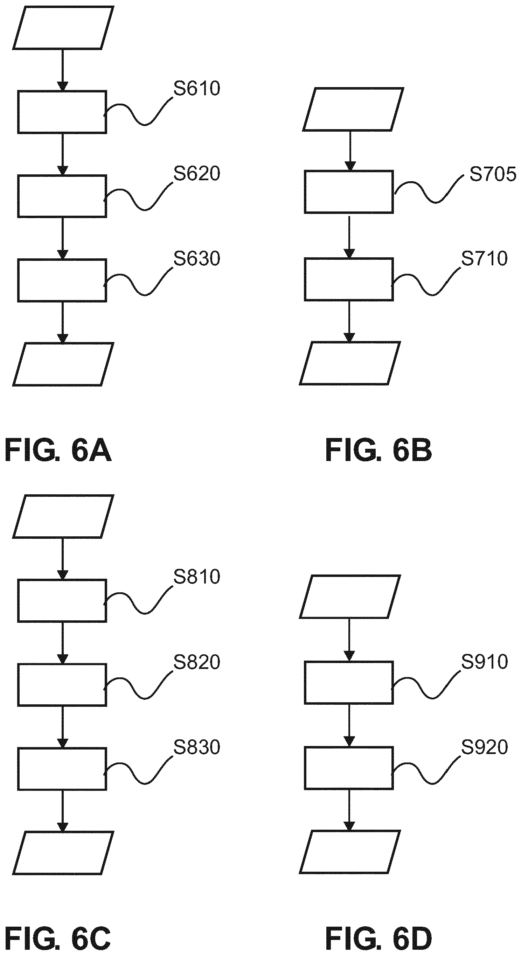

Referring now to Fig. 6, this shows various flow charts A-D that represent operations of the various entities introduced above, in particular the data controller, and the verifier module, the whole system and the cryptographic proof generator. It will be understood however, that the following computer implemented methods are not necessarily tied to the architectures referred to in Figs. 1-5.

Turning now first to the flow chart in Fig. 6A, at step S610 an input is received from a data controller in relation to an encrypted asset receivable by a data receiver. Preferably, the input includes an encrypted version $PB\_\{M\}$ of a decryption key M. The plaintext key M itself is not received. The key M is indicated, or alleged, to be capable of decrypting the encrypted asset. This allegation, at this point are mere claim, is maintained by the data controller who at least professes that the data receiver should have access to the asset. For example, the receiver may have paid for the asset and has, as such, a contractual right for accessing the asset D. The input further includes a commitment C(M) that has been computed for the key M. The commitment C(M), a number, is the result of applying a one-way function, such as hash-function, to the plaintext key M. Specifically, the commitment value is computed by concatenating the plaintext key M with a random value, and then applying the one-way function to the so concatenated data. In other words, the commitment so computed is binding and unchangeable by the data controller.

At step S620 a cryptographic proof is then executed based on the input to compute a verification result that is either positive or negative. A positive result indicates that one or both of following statements are true: i) that the key is indeed capable of correctly decrypting the encrypted asset and/or ii) that the key is a correct encryption of the key. In addition, iii) the positive verification is an indication that the commitment is correct. A negative result is one that is indicative of at least one of i)-iii) as not being true.

At step S630 the encrypted key is released to the data controller only if the verification result is positive.

In particular, step S620 may be executed by a third party, a verifier module, such as a block chain module or otherwise. Because of the cryptographic nature of the proof, the unencrypted key itself is never divulged so the proof can be executed by a party that is not necessarily trustworthy.

The verifier module may carry out step S620. The verifier module does not necessarily have to be trusted third party as no confidential information is divulged. In addition, no interaction between the data controller and data receiver/verifier module is required. A one-way flow of information from the data controller to the verifier module in publishing certain date in respect of which the cryptographic proof takes into account is sufficient to verify the claim by the data controller.

Specifically, the preconfigured cryptographic proof has been prepared by a cryptographic proof generator (more of which below at Fig 6D). The proof, a piece of executable software or hardware or a combination of both, is based on a proof template that represents, in a hidden or shielded manner, the statements to be proven. The preconfigured cryptographic proof is executable in two modes, in a proof posting mode and a verifier mode. The proof posting mode is executable by the data controller providing, as input to the preconfigured cryptographic proof, a prover key and public input PUI and private input PRI data. The proof outputs data that are supposed to show that the statements are true. This (first) output data may be posted to the verifier module. The verifier then uses a verifier key and public data as input to the reconfigured cryptographic proof to have it execute in verifier mode to obtain second output data. The first and second output data are compared to establish the positive of negative verification result. No private or confidential data is made public as all such information in the first and second output data is encoded therein in a shielded manner.

Referring now to flow chart Fig. 6B, this represents steps performed for example by the data controller.

In a preparatory step S705, the data controller operates the pre-configured cryptographic proof in proving mode using the prover key as described above. The first output data is made available to the verifier module.

Then, in step S710 input is provided to a verifier module.

The verifier module is configured to mediate transfer of the encrypted asset from the data controller to a data receiver. This is facilitated by running the pre-configured cryptographic proof in verifier mode using the verifier key to process the provided input. The input comprises on public data, in particular the encrypted key and the commitment for the unencrypted key.

Reference is now made to flow chart Fig. 6C, which indicates steps, at least some of which performable by the verifier module. The verifier module is not necessarily a trusted third party.

At step S810 the verifier module receives input preferably from a data controller that is desirous to provide an encrypted asset to a data receiver. The input includes an encrypted version of the key and a commitment computed for the unencrypted key.

At step S820 the pre-configured cryptographic proof in verifier mode is executed by the verifier module (or other computing unit), based on the input and the verifier key to compute a verification result.

At step S830 the encrypted key is released to the data receiver, based on the verification result. In particular, the key is so released only if the verification result is indicative that i) the cryptographic key is indeed capable of decrypting the asset and/or ii) that the key has been correctly encrypted. In addition, iii) the asset is released only if the commitment is correct. If both, i) and ii) are to be verified, the statement iii) is checked twice, once for statement i) and once for statement ii) during the execution of pre-configured cryptographic proof in verifier mode.

Referring now to Fig. 6D, this includes a flow chart for the cryptographic proof generation.

At step S910 input is received in the form of a specification of a statement to be proven. The statement is one or both of: i) that encrypted key is correct encryption of the plain text key and ii) and that the key is capable of correctly decrypting the asset. Both statements represent knowledge on the part of the data controller who wishes to demonstrate this knowledge to the data receiver for non-repudiation purposes. In addition, the specification includes a further statement, iii) that the commitment is correct.

At step S920, based on the input, the cryptographic proof template is then computed on one or more computerized processing units PU. In embodiments, the computing of the proof template includes mapping the specification into a set of one or more polynomials over a finite field. The finite field may comprise points on an elliptic curve over another finite field, that is, points on the curve with coordinates in the said another finite field.

The prover key and the verifier key are computed and associated with the proof template. The proof template allows configuring the cryptographic proof to be executable in the two modes, upon application of the prover key or the verifier key. The template allows checking the statements in terms of a hidden evaluation of the polynomial(s) at a randomly generated point q, unbeknownst to either party, the data controller, the verifier module (and the data receiver). Preferably, the prover key and the verifier key, further encode the said secret evaluation point q and, in embodiments, the generators g1,g2 as mentioned above that define the homomorphic operation for the hiding function HF.

Using the two keys, the prover key and the verifier key in the described manner to have the cryptographic proof execute in the two different mode is merely according to one embodiment and is not necessarily envisaged in all embodiments. In alternative arrangements, two different templates and/or proofs are provided to the parties, in which case no such two keys are required.

One, more than one, or all steps of any of the above described methods A-D may be implemented on a single processing unit PU or may be computed in a distributed fashion via a plurality of computing units, preferably suitably connectable in a communication network. Some or all steps of each method on Fig 6 may be implemented by a single entity or by a plurality of entities.

The components of system SYS may be implemented as one or more software modules or routines that may run on a single general purpose computing unit PU or, in distributed fashion, on a group of such computing units.

Some or all components may be arranged in hardware such as a suitably programmed FPGA (field-programmable-gate-array) or as hardwired IC chip, or as a combination of hard and software, or wholly in software.

One or more features disclosed herein may be configured or implemented as/with circuitry encoded within a computer-readable medium, and/or combinations thereof. Circuitry may include discrete and/or integrated circuitry, application specific integrated circuitry (ASIC), a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A cryptographic system (SYS) for data exchange, comprising:

   a data controller (DC) to provide an encrypted asset (ED);
   a data receiver (DR) to receive the encrypted asset (ED); and
   a verifier module (VM) to receive input from the data controller, the said input including, a) an encrypted key ({M}_PB), wherein the key (M) is indicated as capable of decrypting the encrypted assert (ED), and b) a commitment (C[M]) indicated as computed for the key (M), the verifier module (VM) to execute at least one pre-configured cryptographic proof based on said input to compute at least one verification result, and the verifier module (VM) to release the encrypted key ({M}_PB) to the data receiver based on the verification result, wherein the verification result is indicative of whether or not i) the encrypted key is a correct encryption of the key and/or, ii) the key (M) is capable of correctly decrypting the assert; and iii) the commitment(C[M]) is correct for the key (M).

2. System of claim 1, wherein the encrypted key is formed by encryption of the key (M) based on a public key (PB) of the data receiver (DR).

3. System of any one of the previous claims 1 or 2, wherein proof is a zero-knowledge proof.

4. A data controller (DC) to provide input to a verifier module (VM) that is configured to mediate providing an encrypted asset (ED) from the data controller to a data receiver (DR), by executing a pre-configured cryptographic proof based on the input, the input comprising an encrypted key ({M}_PB), wherein a) the key (M) is indicated as capable of decrypting the encrypted assert (ED), and b) a commitment (C[M]) indicated as computed for the key (M).

5. A verifier module (VM) having an input interface to receive input from a data controller intended to provide an encrypted asset (ED to a data receiver (DR), the said input including, a) an encrypted key ({M}_PB), wherein the key (M) is indicated as capable of decrypting the encrypted assert (ED), and b) a commitment (C[M]) indicated as computed for the key (M), the verifier module (VM) to execute at least one pre-configured cryptographic proof based on said input to compute at least one verification result, and the verifier to facilitate release of the encrypted key ({M}_PB) to the data receiver based on the verification result.

6. Verifier module (VM) of claim 1 or 5 implemented as a blockchain.

7. A cryptographic proof generator (CPG) configured to generate a cryptographic proof that facilitates transfer, mediated by a verifier module, of an encrypted asset from a data controller to a data receiver, the cryptographic proof generator configured to:

   receive input including a specification of a statement to be proven, the statement being i) that an encrypted key for the asset is a correct encryption of the key and/or ii) that the key is capable of correctly decrypting the assert, and iii) that a commitment for the key is correct; and
   computing from the input, a cryptographic proof template (PI, P2) executable by a processing unit (PU).

8. Cryptographic proof generator of claim 7, wherein the computing of the proof template (P1,P2) includes mapping the received input into one or more polynomials defined over a finite field.

**9.** A cryptographic method of exchanging an encrypted asset (ED), comprising:

receiving (S610) input from a data controller, the said input including, a) an encrypted key ({M}_PB), wherein the key (M) is indicated as capable of decrypting the encrypted assert (ED), and b) a commitment (C[M]) indicated as computed for the key (M);

executing (S620) at least one pre-configured cryptographic proof based on said input to compute at least one verification result, wherein the verification result is indicative of whether or not i) the encrypted key is a correct encryption of the key and/or, ii) the key (M) is capable of correctly decrypting the assert; and iii) the commitment(C[M]) is correct for the key (M); and

in dependence on the verification result, releasing (S630) the encrypted key ({M}_PB) to a data receiver.

**10.** A cryptographic method of data exchange, comprising:

providing (S710) input to a pre-configured cryptographic proof template, the input comprising an encrypted key ({M}_PB), wherein a) the key (M) is indicated as capable of decrypting the encrypted assert (ED), and b) a commitment (C[M]) indicated as computed for the key (M).

**11.** A method of generating a cryptographic that facilitates transfer of an encrypted asset from a data controller to a data receiver, comprising:

receiving (S910) input including a specification of a statement to be proven, the statement being i) that an encrypted key for the asset is a correct encryption of the key and/or ii) that the key is capable of correctly decrypting the assert, and iii) that a commitment for the key is correct; and

computing (S920) from the input, a cryptographic proof template (P1, P2) executable by a processing unit (PU).

**12.** Method of claim 11, wherein the computing of the proof template (P1,P2) includes mapping the received input into one or more polynomials defined on a finite field.

**13.** A computer program element, which, when being executed by at least one processing unit (PU), is adapted to cause the processing unit (PU) to perform a method as per any one of claims 9-12.

**14.** At least one computer readable medium having stored thereon the program element of claim 13.

**FIG. 1**

DC

ENC1

VM

DR

PK

D → M

ENC1

010
111
1100110
1101101
1100001

ED

PB

VK

PB

## FIG. 2A

ENC2

VM

DC

DR

{M}_PB

PK

010
111
1100110
1101101
1100001

ED

PB

VK

PB

## FIG. 2B

FIG. 3A

FIG. 3B

**FIG. 4**

**FIG. 5**

**FIG. 6A**

**FIG. 6B**

**FIG. 6C**

**FIG. 6D**

Europäisches
Patentamt

European
Patent Office

Office européen
des brevets

# EUROPEAN SEARCH REPORT

Application Number

EP 19 18 5720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FENG HAO ET AL: "Deleting Secret Data with Public Verifiability", IACR, INTERNATIONAL ASSOCIATION FOR CRYPTOLOGIC RESEARCH, vol. 20150414:151452, 14 April 2015 (2015-04-14), pages 1-14, XP061017998, [retrieved on 2015-04-14] * abstract * * section 1.3 * * section 3 * * section 4.2.2 * * section 4.2.4 * | 1-14 | INV. H04L9/32 |
| X | ARI JUELS ET AL: "The Ring of Gyges: Investigating the Future of Criminal Smart Contracts", IACR, INTERNATIONAL ASSOCIATION FOR CRYPTOLOGIC RESEARCH, vol. 20160408:015115, 6 April 2016 (2016-04-06), pages 1-28, XP061020198, [retrieved on 2016-04-06] * abstract * * section 1.1 * * sections 4.1, 4.2, 4.5 * * Appendix F.3 * | 1-14 | |

-----

-----

-/--

TECHNICAL FIELDS
SEARCHED (IPC)

H04L

The present search report has been drawn up for all claims

| Place of search | Date of completion of the search | Examiner |
|---|---|---|
| Munich | 7 January 2020 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Application Number

EP 19 18 5720

Europäisches Patentamt
European Patent Office
Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTEO CAMPANELLI ET AL: "Zero-Knowledge Contingent Payments Revisited: Attacks and Payments for Services", IACR, INTERNATIONAL ASSOCIATION FOR CRYPTOLOGIC RESEARCH , vol. 20171101:190916 9 June 2017 (2017-06-09), pages 1-26, XP061023635, Retrieved from the Internet: URL:http://eprint.iacr.org/2017/566.pdf [retrieved on 2017-06-09] * abstract * * section 2.5 * | 1-14 | |
| A | SERGI DELGADO-SEGURA ET AL: "A fair protocol for data trading based on Bitcoin transactions", FUTURE GENERATIONS COMPUTER SYSTEMS., 1 August 2017 (2017-08-01), XP055410884, NL ISSN: 0167-739X, DOI: 10.1016/j.future.2017.08.021 * section 4.2.2 * | 1-14 | |

TECHNICAL FIELDS
SEARCHED (IPC)

The present search report has been drawn up for all claims

| Place of search | Date of completion of the search | Examiner |
|---|---|---|
| Munich | 7 January 2020 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6252960 B

**Non-patent literature cited in the description**

- **X. GOLDWASSER ; X. MICALI et al.** The knowledge complexity of interactive proof system. SIAM Journal on Computing, 1989, vol. 18, 186-208
- From extractable collision resistance to succinct non-interactive arguments of knowledge, and back again. *Proceeding ITCS '12 Proceedings of the 3rd Innovations in Theoretical Computer Science Conference,* 2011, 326-349
- Algebraic methods for interactive proof systems. **C LUND et al.** Proceedings [1990] 31st Annual Symposium on Foundations of Computer Science. IEEE, 22 October 1990
- Quadratic Span Programs and Succinct NIZKs without PCPs. **R GENNARO et al.** Advances in Cryptology - EUROCRYPT 2013. EUROCRYPT 2013. Lecture Notes in Computer Science. Springer, 2013, vol. 7881, 626-645